# EUROPEAN PATENT APPLICATION

(11) **EP 2 703 360 A1**
(43) Date of publication of application: **05.03.2014**
(21) Application number: 12182751.3
(22) Date of filing: 03.09.2012
(51) Int. Cl.: C02F 1/66, C02F 1/76, C02F 1/68

(54) **Process and device for the purification of water**

(71) Applicant: Siemens Aktiengesellschaft, 80333 München (DE)
(72) Inventor: Schnitzler, Simon, 89346 Bibertal (DE)

(57) **Abstract**

A process and a device (1, 31) for the purification of water by adding an alkaline and/or an alkaline reacting fluent (19, 49) to a water flow (9, 39) are disclosed, wherein the alkaline and/or the alkaline reacting fluent (19, 49) is guided through a pipeline (15, 45) to an outlet (17, 47) of the pipeline (15, 45), and wherein the alkaline and/or the alkaline reacting fluent (19, 49) exits the outlet (17, 47) of the pipeline (15, 45) at a distance from the water flow (9, 39).

## Description

The invention relates to a process and to a device for the purification of water, especially for the purification of drinking water.

During a water purification process undesirable chemicals, biological contaminants, suspended solids and gases are removed from contaminated water. The goal is to produce water usable for a specific purpose, especially for drinking water. The standard values for drinking water quality are typically set by international standards, which allow minimum and maximum concentrations of additional substances for the intended use of the water.

In this context, the pH value of drinking water is of fundamental importance regarding its compatibility for use, wherein an optimal value is roughly in the neutral area. For example, water with a too low pH value may be corrosive for materials like iron or copper. This can lead to increased corrosion in metallic water pipes, wherein the drinking water can be contaminated by solved metals.

Therefore, it is necessary to regulate the pH value of the drinking water in a range of about 7. With regard to that, it is well-established to add alkaline or alkaline reacting fluents, as for example sodium hydroxide, to basically neutralize the water and to regulate the pH value.

However, though the dosing itself seems to be relatively simple to operate, there often occur problems regarding the so-called dosing point. While adding the alkaline or alkaline reacting fluents through a pipeline to a water flow, there is a direct contact between the outlet of the pipeline and the water flow at this dosing point. Due to this, chalk dissolved in the water is precipitated because of the increase of the pH value. This precipitation may cause a plugging of the outlet of the pipeline and by that avoid the safe dosing of alkaline or alkaline reacting fluents.

Furthermore, in case of inactive dosage, the contact between the outlet and the water flow leads to compensation currents between the pipeline and the water flow due to concentration differences. In particular, the active agent is dosed to the water flow without any need. Especially at high agent concentrations of the alkaline or alkaline reacting fluent and/or at low treated flow rates of the water flow, the dosing accuracy is affected.

To avoid the aforementioned problems, flexible catches of elastic materials, so called slice valves, may be used at the outlet of the dosing pipeline. During the dosing process, the slice valves are opened due to the increased inner pressure of the dosing medium in the pipeline. By this movement of the valve slices, chalk deposits at the dosing point can be removed. Further, at unstressed conditions, the slice valves are closed to avoid an undesired dosing.

However, even the use of slice valves is limited. For example, due to the elasticity of the material, the size of the valves is limited. Slice valves are not available for diameters bigger than about 20 mm. Furthermore, the creep resistance of the valves is restricted because of the elasticity of the material.

Another possibility to avoid the problem of plugging of the outlet of a pipeline with a diameter bigger than about 20 mm is to clean the contact area at the dosing point from chalk deposit. This can be reached by using a dosing point, which can be removed from the device. But it is obvious that such processes are coupled with high maintenance requirements and increased costs.

It is therefore an object of this invention to provide a process and a device for water purification, which allow adding alkaline and/or alkaline reacting fluents to a water flow avoiding the above-mentioned problems and by that facilitating the process.

The object with regard to the process is achieved with regard to the invention by a process for the purification of water by adding an alkaline and/or an alkaline reacting fluent to a water flow, wherein the alkaline and/or the alkaline reacting fluent is guided through a pipeline to an outlet, and wherein the alkaline and/or the alkaline reacting fluent exits the outlet of the pipeline at a distance from the water flow.

The invention is based on the fact that adding of an alkaline and/or an alkaline reacting fluent to a water flow is needed for regulating the pH value or for disinfection during the process of water purification. During this process, the precipitation of chalk as a result of the shift of the pH value while adding the fluent is chemically inevitable. The dosing devices used so far cannot ensure reliable dosing processes.

With regard to that, the invention realizes that a plugging of the outlet of the pipeline by a chalk deposit can be avoided easily, if there is no contact between the outlet and the water flow. This can be reached if the added alkaline and/or the alkaline reacting fluent exits the outlet of a pipeline at a distance from the water flow. In particular, the outlet of the pipeline and the pipeline itself should not be brought in contact with the treated water flow. Therefore, there is no precipitation of chalk at these relevant positions.

In other words, the shift of the pH value and the depending chalk precipitation during the dosing process has been transferred from the dosing point at the outlet of the pipeline into the water flow, an area of no or even less relevance.

Since there is no direct contact between the alkaline and/or the alkaline reacting fluent and the water flow, even compensatory currents due to concentration differences are excluded. Further, in case of inactive dosage, unwanted addition of reacting fluents to the water flow as a result of concentration differences, which affect the accuracy of dosing, can be reliably prevented.

As well, cleaning of the dosing pipeline is not required. Therefore there is also no risk of alkaline and/or alkaline reacting fluents and acidic cleaners, used for solving chalk, to get in contact with each other resulting in an undesired chemical reaction.

Altogether, a process and a device with a contactless adding of an alkaline and/or an alkaline reacting fluent to a water flow allows the controlled dosing of the fluent without running the risk of plugging the pipeline with regard to a chalk deposit. The proposed process is easy to handle and fail-safe. Further, there is less amount of work in terms of maintenance requirements, because a cleaning of the pipeline will not be necessary.

An inserted alkaline fluent has a pH value in the range above 7 and by that causes the shift of the pH value in the treated water flow. An alkaline reacting fluent causes the pH shift by reacting with other substances in the treated water flow. Hence, the alkaline reacting fluent does not necessarily have a pH value above 7.

In a preferred embodiment of the invention the alkaline and/or the alkaline reacting fluent passes the outlet of the pipeline dropwise. In particular the fluent exits the outlet in a kind of free fall thereby forming droplets before entering the waterflow. By this, the amount of the fluent reaching the treated water flow is sufficiently small enough to prevent precipitation of chalk even in the water flow. According to another preferred embodiment, the alkaline and/or the alkaline reacting fluent passes a gas volume before added to the water flow. The pipeline ends in the gas volume above the treated water flow. Particularly, the gas volume is charged either by gas bubbles from the alkaline and/or the alkaline reacting fluent. Preferably, ambient air is introduced in the gas volume.

In yet another favorable embodiment of the invention, the alkaline and/or the alkaline reacting fluent passes a gas reservoir, wherein the gas volume is stored, before added to the water flow. Because of its cost effectiveness preferably air is introduced into the reservoir. However, this embodiment also allows adding nitrogen or an inert gas to the reservoir which is passed by the alkaline and/or the alkaline reacting fluent. Further, because the gas reservoir is a closed system, a gas reservoir also allows to regulate the gas pressure inside the gas volume.

Favorably, the gas is introduced to the gas volume by an inlet pipe. The inlet pipe may be given for example as an additional pressure gas pipeline connected to the pipeline for adding the alkaline and/or the alkaline reacting fluents. Alternatively, the gas is introduced into the gas volume by an inlet pipe connected to the gas reservoir directly.

Alkaline and/or alkaline reacting fluents may be for example alkali hydroxide or hypochlorite solutions, which are well-known for purification of drinking water.

Preferably, a sodium hydroxide solution as an alkaline fluent is added, in particular dosed dropwise, to the water flow. Sodium hydroxide is a well-established chemical for the purification of drinking water and is easy to handle.

In yet another favorable embodiment of the invention a hypochlorite solution as an alkaline reacting fluent is added, in particular dosed dropwise, to the water flow. Hypochlorite solutions as such act primarily as disinfection agents for water, but have also the effect of increasing the pH value in the water to be treated. The hypochlorite solutions may be for example sodium hypochlorite or calcium hypochlorite solutions.

Of course, the alkaline and/or alkaline reacting fluent as claimed is not limited to the substances mentioned above. The concentrations of the alkaline and/or alkaline reacting fluent in the used solutions are chosen depending on the desired shift of the pH value in the water to be treated.

In accordance with the teachings of the present invention, there is also disclosed a device for water purification, comprising a flowtube for guiding of a water flow, the flowtube having an inlet, and a pipeline with an outlet for dosing an alkaline and/or an alkaline reacting fluent to the water flow by introducing a stream of the alkaline and/or the alkaline reacting fluent through the inlet of the flowtube, wherein the outlet of the pipeline is arranged at a distance of the inlet of the flowtube.

The device is especially usable for carrying out the process for the purification of water as already described above.

According to a preferred embodiment of the invention, the outlet of the pipeline is separated from the inlet of the flowtube by a gas volume. In other words, the pipeline ends in the gas volume well above the treated water flow. The outlet of the pipeline is not in a direct contact with the treated water flow. Hence, the shift of the pH value and the depending chalk precipitation during the dosing process is transferred to the water flow.

Further, due to the missing contact between the alkaline and/or the alkaline reacting fluent and the water flow, compensatory currents due to the concentration difference are excluded.

In yet another preferred embodiment the outlet of the pipeline and the inlet of the flowtube are connected with a gas reservoir. alkaline and/or an alkaline reacting fluentThe fluent arrives at the water flow after having passed the gas reservoir, wherein the gas reservoir is for example charged by gas bubbles from the alkaline and/or the alkaline reacting fluent.

Preferably, the device comprises an inlet pipe to charge the gas volume with gas. This inlet pipe may be connected to the gas volume to be charged with gas, especially air. Using a separate inlet pipe, the amount of gas can be adjusted as used.

In still another embodiment of the invention the inlet pipe is connected to the pipeline for dosing the alkaline and/or the alkaline reacting fluent. By that the gas, which is added through the inlet pipe, is guided through the alkaline and/or alkaline reacting fluent before entering the gas volume.

Preferably, the alkaline fluent is a sodium hydroxide fluent. Sodium hydroxide is a well-established chemical used in purification processes and easy to handle.

Alternatively, the alkaline reacting fluent is a hypochlorite fluent. The hypochlorite solutions may be for example sodium hypochlorite or calcium hypochlorite solutions.

As still mentioned, the claimed invention is not limited to the mentioned substances used as an alkaline and/or alkaline reacting fluent.

These and various other features of the present invention will become better understood upon reading of the following description of preferred embodiments in conjunction with the accompanying drawings.
- FIG 1: is a schematic view of a first device for the purification of water by dosing a sodium hydroxide solution to a water flow.
- FIG 2: is a schematic view of a second device for the purification of water by dosing a calciumhypochlorit solution to a water flow.

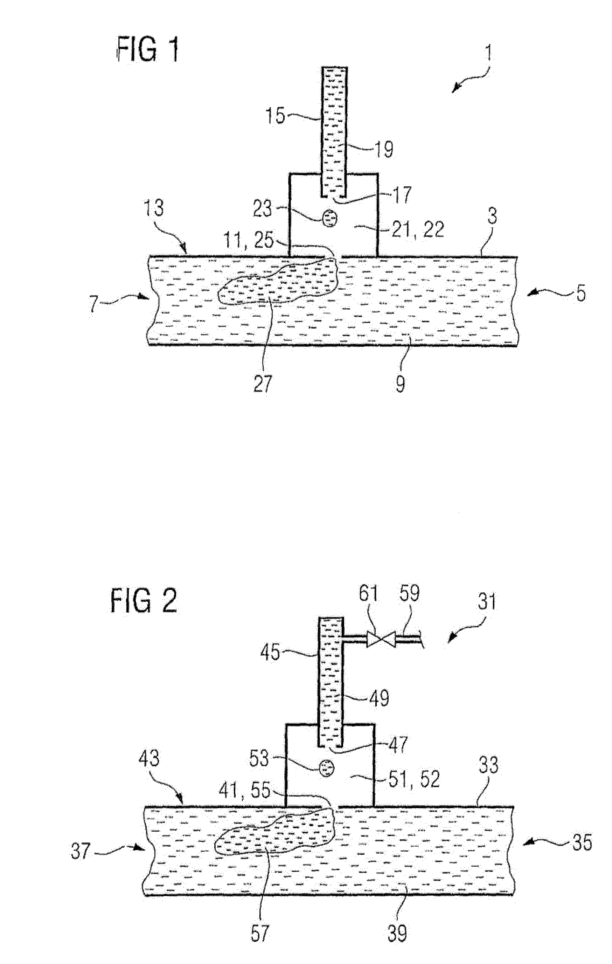

In FIG 1 a device 1 for the purification of water is shown. The device has a flowtube 3 with openings 5, 7 on either end. One opening 5 is the inlet for the non treated water flow 9, passing the flowtube 3 in process. The other opening 7 is the outlet for the water flow 9 after being treated. Furthermore, the flowtube 3 has an inlet 11 at its curved surface 13.

The device 1 has a pipeline 15 with an outlet 17 at its end. Through this pipeline 15 a sodium hydroxide solution 19 is guided to the outlet 17 to be added the water flow 9 in the flowtube 3.

The outlet 17 of the pipeline 15 faces the inlet 11 of the flowtube 3, so that a stream of the sodium hydroxide solution 19 can be added through the inlet 11 of the flowtube 3. To avoid chalk precipitation at the outlet 17 of the pipeline 15, there is no direct contact to the water flow 9. The sodium hydroxide solution 19 exits the outlet 17 of the pipeline 15 at a distance from the water flow 9.

This distance is reached by a gas reservoir 21, which is positioned between the outlet 17 of the pipeline 15 and the inlet 11 of the flowtube 3. The gas reservoir 21 is filled with air from the sodium hydroxide solution 19, which passes the gas reservoir 21 dropwise 23. After passing the gas reservoir 21, the sodium hydroxide solution 19 reaches the water flow 9.

The gas reservoir 21 between the outlet 17 of the pipeline 15 and the waterflow 9 in the flowtube 3 ensures the necessary distance between these components and avoids the plugging of the outlet 17 by chalk deposit. There is no precipitation of chalk at the dosing point 25 and the shift of the pH value and the depending chalk precipitation during this dosing process is the transferred to areas 27 of the water flow 9 of less relevance regarding possible chalk precipitation.

In FIG 2 another device 31 for the purification of water is shown. The device 31 also has a flowtube 33 with openings 35, 37 on either end for the flow of water 39. The flowtube 33 has also an inlet 41 at its curves surface 43, which is faced by the outlet 47 of the pipeline 45. Through this pipeline 45 a calciumhypochlorit solution 49 is guided to the outlet 47 to be added the water flow 39 in the flowtube 33.

The calciumhypochlorit solution 49 is dosed to the water flow 39 through the outlet 47 of the pipeline 45. Possible chalk precipitation at the outlet 47 is avoided, because a gas reservoir 51 is positioned between the pipeline 45 and the inlet 41 of the flowtube 33. The calciumhypochlorit solution 49 passes the gas reservoir 51 dropwise 53.

As also described in FIG 1, the gas reservoir 51 ensures the necessary distance between the outlet 47 and the inlet 41 of the flowtube. The shift of the pH value and by that the precipitation of chalk is only limited to the water flow 39, and for that reason relatively uncritical. The plugging of the outlet 47 and the pipeline 45 itself by chalk deposit at the dosing point 55 is avoided.

The device 31 differs from the device 1 according to FIG 1 regarding the charging of the gas reservoir 51. The gas reservoir 51 is also charged with air, but this air is added to the calciumhypochlorit solution 49 by a separate gas inlet 59, which is connected to the pipeline 45 for adding the fluent. The gas inlet 59 further has a blocking valve 61 for stopping the addition of air to the pipeline 45 if necessary. By that, for example the gas pressure inside the gas reservoir 51 can be regulated.

### Reference numeral list

- 1: Device
- 3: Flowtube
- 5: Opening
- 7: Opening
- 9: Water flow
- 11: Inlet
- 13: Surface
- 15: Pipeline
- 17: Outlet
- 19: Fluent
- 21: Gas reservoir
- 22: Gas volume
- 23: Droplet
- 25: Dosing Point
- 27: Fluent
- 31: Device
- 33: Flowtube
- 35: Opening
- 37: Opening
- 39: Water flow
- 41: Inlet
- 43: Surface
- 45: Pipeline
- 47: Outlet
- 49: Fluent
- 51: Gas Reservoir
- 52: Gas Volume
- 53: Droplet
- 55: Dosing Point
- 57: Fluent
- 59: Gas inlet pipe
- 61: Blocking valve

## Claims

1. Process for the purification of water by adding an alkaline and/or an alkaline reacting fluent (19, 49) to a water flow (9, 39), wherein the alkaline and/or the alkaline reacting fluent (19, 49) is guided through a pipeline (15, 45) to an outlet (17, 47) of the pipeline (15, 45), and wherein the alkaline and/or the alkaline reacting fluent (19, 49) exits the outlet (17, 47) of the pipeline (15, 45) at a distance from the water flow (9, 39).

2. The process of claim 1, wherein the alkaline and/or the alkaline reacting fluent (19, 49) passes the outlet (17, 47) of the pipeline (15, 45) dropwise (23, 53).

3. The process of claim 1 or 2, wherein the alkaline and/or the alkaline reacting fluent (19, 49) passes a gas volume (22, 52) before added to the water flow (9, 39).

4. The process of claim 3, wherein the alkaline and/or the alkaline reacting fluent (19, 49) passes a gas reservoir (21, 51) with the gas volume (22, 52) stored therein, before added to the water flow (9, 39).

5. The process of claim 3 or 4, wherein a gas is introduced to the gas volume (22, 52) by the aid of an inlet pipe (59).

6. The process of any of the preceding claims, wherein a sodium hydroxide fluent is added as the alkaline fluent (19, 49) to the water flow (9, 39).

7. The process of any of the claims 1 to 5, wherein a hypochlorite fluent is added as the alkaline reacting fluent (19, 49) to the water flow (9, 39).

8. A device (1, 31) for the purification of water, comprising a flowtube (3, 23) for guiding a water flow (9, 39), the flowtube (3, 23) having an inlet (11, 41), and a pipeline (15, 45) with an outlet (17, 47) arranged for dosing an alkaline and/or an alkaline reacting fluent (19, 49) to the water flow (9, 39) by introducing a stream of the alkaline and/or the alkaline reacting fluent (19, 49) through the inlet (11, 41) of the flowtube (3, 23), wherein the outlet (17, 47) of the pipeline (15, 45) is placed at a distance of the inlet (11, 41) of the flowtube (3, 23).

9. The device (1, 31) of claim 8, wherein the outlet (17, 47) of the pipeline (15, 45) is separated from the inlet (11, 41) of the flowtube (3, 23) by a gas volume (22, 52).

10. The device (1, 31) of claims 8 or 9, wherein the outlet (17, 47) of the pipeline (15, 45) and the inlet (11, 41) of the flowtube (3, 23) are connected through a gas reservoir (21, 51).

11. The device (1, 31) of any of the claims 8 to 10, further comprising an inlet pipe (59), the inlet pipe (59) being designed to charge the gas volume (22, 52) with a gas.

12. The device (1, 31) of claim 11, wherein the inlet pipe (59) is connected to the pipeline (15, 45) for dosing the alkaline and/or the alkaline reacting fluent (19, 49).

13. The device (1, 31) of any of the claims 8 to 12, wherein the alkaline fluent (19, 49) is a sodium hydroxide fluent.

14. The device (1, 31) of any of the claims 8 to 13, wherein the alkaline reacting fluent (19, 49) is a hypochlorite fluent.
